# EUROPEAN PATENT APPLICATION

(11) **EP 2 317 222 A1**
(43) Date of publication of application: **04.05.2011**
(21) Application number: 09174635.4
(22) Date of filing: 30.10.2009
(51) Int. Cl.: F23L 7/00, F23D 1/00

(54) **Method of combusting particulate solid fuel with a burner**

(71) Applicant: L'AIR LIQUIDE, Société Anonyme pour l'Etude et l'Exploitation des Procédés Georges Claude, 75007 Paris (FR)
(72) Inventor: Belasse, Brenice, 95600, Eaubonne (FR); Mulon, Jacques, 91300, Massy (FR); Panier, Faustine, 78350, Jouy en Josas (FR); Paubel, Xavier, 92290, Chatenay Malabry (FR); Tsiava, Rémi, 91250, Saint Germain Les Corbeil (FR)
(74) Representative: De Vleeschauwer, Natalie Y.L.D.

(57) **Abstract**

A method of combining oxygen and fuel in a burner to produce a flame whereby an outer oxidant flow is discharged through an outer oxidant outlet of the burner; a flow of conveyor-gas propelled particulate solid fuel is discharged with a fuel discharge velocity through a fuel outlet of the burner arranged coaxially with respect to the outer oxidant outlet and spaced radially inwardly therefrom; and a first inner oxidant flow is discharged with an inner oxidant discharge velocity, which differs from the fuel discharge velocity, through an inner oxidant end outlet of the burner arranged coaxially with respect to said fuel outlet and spaced radially inwardly therefrom; and whereby a second inner oxidant flow, having a higher oxygen concentration than the conveyor gas is injected into the fuel-conducting passage and mixed with the fuel flow inside said fuel-conducting passage so as to obtain, upstream of the fuel outlet and upstream of the inner oxidant end outlet, an oxygen-enriched conveyor-gas propelled particulate solid fuel flow having an oxygen content of at least 21%vol O₂.

## Description

The present invention relates to an improved method of combusting particulate solid fuel, such as pulverized coal.

From the applicant's earlier patent application EP-A-0763692, it is known to bum gaseous fuel in an oxy-fuel burner, whereby:
- an outer oxidant flow is conducted through an outer oxidant-conducting passage and discharged through an outer oxidant outlet;
- a gaseous fuel flow is conducted through a fuel-conducting passage and is discharged through a fuel outlet arranged coaxially with respect to the outer oxidant outlet and spaced radially inwardly therefrom; and
- an inner oxidant flow is conducted through an inner oxidant-conducting passage and is discharged through an inner oxidant outlet arranged coaxially with respect to the fuel outlet and spaced radially inwardly therefrom,
whereby each of the outer and inner oxidant flows preferably contains at least 80% oxygen.

This known method as developed by the applicant enables various characteristics of the flame to be effectively controlled by changing the relative flow rates of the gaseous fuel and oxidant flows. For example, by decreasing the inner oxidant flow, the length and luminosity of the flame can be increased, and the flame momentum can be decreased without any mechanical modification of the burner. An important advantage of said method is that it is possible to maintain an optimum flame length when varying the firing rate of the burner. Furthermore, the control of the relative flow rates can be used to change the luminosity of the flame. These properties make this known method for combusting gaseous fuel highly desirable.

However, coal is more abundantly available than gaseous fuel.

It would therefore be desirable to provide a method having advantageous properties similar to those of the known process, but which is applicable to the combustion of a solid fuel such as coal at an industrial level.

It is a goal of the present invention to provide such a method.

It is known in the art to supply coal for combustion to a burner in the form of conveyor-gas propelled pulverized coal. This enables the particulate solid fuel to be supplied to the burner and from the burner to the combustion zone in a manner similar to the supply of gaseous fuel.

Nevertheless, tests conducted by the applicant with different known conveyor-gas propelled particulate solid fuels have shown that the method known from EP-A-0763692 is not as such suitable for the combustion of conveyor-gas propelled particulate solid fuel. It is speculated that this is due to the fundamental differences between the mechanism of combusting gaseous fuels and the multi-step mechanism of combusting solid fuels, which includes, for example, a devolatilisation step. In particular, the phenomena observed by the applicant during these tests were incomplete fuel combustion, flame detachment and flame instability, all of which are highly detrimental to the efficiency of industrial combustion processes.

It is a further goal of the present invention to provide a method for combusting conveyor-gas propelled particulate solid fuel by means of a burner, having similar advantages as those obtained with the method according to EP-A-0763692, and whereby the observed problems of incomplete combustion, flame instability and flame detachment can be overcome.

In accordance with the present method, there is provided a new method of combining oxygen and conveyor-gas propelled particulate solid fuel in a burner to produce a flame. The method comprises the steps of:
- supplying an outer flow of oxygen-containing oxidant to an outer oxidant-conducting passage of the burner, conducting said outer oxidant flow through said outer oxidant-conducting passage and discharging said outer oxidant flow from said outer oxidant-conducting passage through an outer oxidant outlet of the burner,
- supplying a fuel flow to a fuel-conducting passage of the burner, conducting said fuel flow through said fuel-conducting passage and discharging said fuel flow with a fuel discharge velocity from said fuel-conducting passage through a fuel outlet arranged of the burner coaxially with respect to said outer oxidant outlet and spaced radially inwardly therefrom, and
- supplying a first inner flow of oxygen-containing oxidant to an inner oxidant-conducting passage of the burner, conducting said first inner oxidant flow through said inner oxidant-conducting passage and discharging said first inner oxidant flow with an inner oxidant discharge velocity from said inner oxidant-conducting passage through an inner oxidant end outlet of the burner arranged coaxially with respect to
said fuel outlet and spaced radially inwardly therefrom, the fuel flow being a flow of conveyor-gas propelled particulate solid fuel.

It is a specific characteristic of the present invention that a second inner oxidant flow is supplied to the burner. Said second inner oxidant flow, which has a higher oxygen concentration than the conveyor gas, is injected into the fuel-conducting passage and is thus mixed with the fuel flow inside said fuel-conducting passage so as to obtain, upstream of the fuel outlet and upstream of the inner oxidant end outlet, an oxygen-enriched conveyor-gas propelled particulate solid fuel flow having an oxygen content of at least 21%vol O₂.

It is a further aspect of the invention, that the fuel flow, in the form of the oxygen-enriched conveyor-gas propelled particulate solid fuel flow, is discharged from the fuel-conducting passage with a fuel discharge velocity which differs from the inner oxidant discharge velocity with which the first inner oxidant flow is discharged from the inner oxidant-conducting passage so as to promote mixing between the fuel flow and the first inner oxidant flow downstream of the inner oxidant end outlet.

Preferably, the second inner oxidant flow is injected into the fuel-conducting passage so as to obtain, upstream of the fuel outlet and upstream of the inner oxidant end outlet, an oxygen-enriched conveyor-gas propelled particulate solid fuel flow having an oxygen content of at least 28%vol, and more preferably of at least 32%vol. Thereto, the second inner oxidant flow advantageously has an oxygen content of at least 50%vol O₂, preferbly of at least 80 %vol O₂ and more preferably of at least 90%vol O₂. Usefully, both the first and second inner oxidant flows have an oxygen content of at least 50%vol O₂, preferbly of at least 80 %vol O₂ and more preferably of at least 90%vol O₂. On a practical level, it is interesting for the first and second inner oxidant flows to have the same oxidant content, in which case they can easily be supplied by a single oxidant source.

The outer oxidant flow may have the same oxidant content as one or both of the first and second inner oxidant flows or may have a different oxidant content. The oxidant content of the outer oxidant flow may be lower than the oxidant content of the first and second inner oxidant flows. The outer oxidant may in particular be air or synthetic air obtained by mixing oxygen with a gas which is generally inert to combustion. Such synthetic air advantageously contains a mixture of oxygen and one or more of combustion gases (i.e. combustion fumes), CO₂ and water vapour and can, for example, have an oxygen content of about 21%vol O₂. When an outer oxidant flow with a lower oxygen content, e.g. an oxygen content of aut 21 %vol O₂, such as air, is used, a more diffuse flame and larger volume of combustion gases are obtained, as may be advantageous in some industrial combustion processes. When, on the other hand, an outer oxidant flow with a higher oxygen content is used, such as an outer oxidant having an oxygen content of at least 50%vol O₂, of at least 80%vol O₂, or even of at least 90%vol O₂, a more intense flame and smaller volumes of combustion gases are obtained, which may be preferable for other industrial combustion processes. It also enables lower NOx emissions. In particular, the outer, the first inner and the second inner oxidant flows may all have the same oxygen content, in which case they may be supplied by a single oxidant source.

The conveyor gas, which propels the particulate solid fuel to and through the fuel-conducting passage may be air. The conveyor gas may also be or contain combustion gas, CO₂ and/or water vapour. It will be understood that, when the conveyor gas has an oxygen content of 21%vol O₂, the oxygen-enriched conveyor-gas propelled particulate solid fuel flow will have an oxygen content higher than 21%vol O₂, which is generally preferred. High oxygen contents in the conveyor gas upstream of the fuel-conducting passage of the burner are to be avoided, in view of the risks of premature ignition and explosion.

The method of the invention is useful for a wide range of particulate solid fuels, including pulverized coal, pet coke, particulate biomass and mixtures thereof. It is particularly useful for the combustion of pulverized coal, including low-grade pulverized coal which has been shown to be difficult to combust efficiently with known particulate fuel burners.

The burner used in the method of the invention advantageously comprises a burner block with a through passage into which the outer oxidant-conducting passage, the fuel-conducting passage and the inner oxidant-conducting passage are mounted. The outlets of the respective gas conducting passages (the inner oxidant-conducting passage, the fuel-conducting passage and the outer oxidant-conducting passage) are then preferably set back from the outlet opening of the through passage in the burner block, which outlet faces the combustion chamber of the furnace.

According to a preferred embodiment of the present invention, the second inner oxidant flow is injected into the fuel-conducting passage at multiple points of injection along the length of the fuel-conducting passage. In this manner, the conveyor-gas propelled particulate solid fuel flow is progressively enriched with oxygen towards the fuel outlet. This embodiment presents a number of advantages such as a lower risk of premature ignition or explosion. Multiple-point injection of the second inner oxidant flow into the fuel-conducting passage also lowers the risk of inhomogeneous distribution of the particulate solid fuel in the conveyor gas, such as particle settling, roping, etc. A particularly suited burner for use in the present invention is described in European patent application 09174622.2 filed on the same day as the present patent application and incorporated herein by reference, more specifically the embodiments of said burner with a central oxygen lance. The present invention therefore also relates to the use of such a burner in the present method.

Oxygen enrichments of the conveyor-gas propelled particulate solid fuel flows up to an oxygen content of 35%vol O₂ and more was achieved with the method according to the invention without premature ignition or explosion. In practice, the upper limit for the oxygen enrichment of the conveyor-gas propelled particulate solid fuel flow is determined by the properties, and in particular the flammability, of the particulate solid fuel and, to a lesser extent, by the properties of the conveyor gas.

The fuel flow, in the form of the oxygen-enriched conveyor-gas propelled particulate solid fuel flow, is preferably mixed with the first inner oxidant flow before being mixed with said outer oxidant flow. This can be achieved by having the inner oxidant end outlet upstream of the fuel outlet. In this manner increased flame stability and attachment is achieved. The combustion is then a staged combustion, with the first inner oxidant flow acting as a primary oxidant flow and the outer oxidant flow acting as a secondary oxidant flow.

The total oxygen supply to the burner typically corresponds to the stoichiometrically required amount of combustion oxygen or a minor excess thereof (for example, an total oxygen supply of upto 115% of the stoichiometrically required amount).

The total oxygen supply to the burner may also be less than the stoichiometrically required amount of combustion oxygen, in particular when the method includes a separate supply of additional oxygen, which is injected separately from the burner.

The total supply of oxygen to the burner is the sum of the oxygen supplied through the outer oxidant flow and through the first and second inner oxidant flows, as well as any oxygen that may be supplied as part of the conveyor gas, for example when the conveyor gas is air. According to a useful embodiment, at least 35% of the total oxygen supply to the burner is supplied through the outer oxidant flow, preferably at least 50% and more preferably at least 60%.

The first inner oxidant discharge velocity can advantageously be equal to or greater than the outer oxidant discharge velocity, and is preferably in the range of from about 10 to 200 m/s. The fuel discharge velocity can notably be in the range of from 10 to 80 m/s, whereas the outer oxidant discharge velocity is suitably in the range of 10 to 50 m/s.

The present invention also relates to the use of the method to produce heat in a combustion zone of the furnace, whereby the furnace can in particular be a tunnel kiln or furnace, a passage kiln, a boiler, a rotary kiln or furnace or a tunnel furnace, the particulate solid fuel preferably being preferably pulverized coal.

The method of the invention can in particular be advantageously used in a furnace for the production of hydraulically setting binder, such as cement lime or plaster.

### Example

Tests were conducted with different ratios of first to second inner oxidant flows.

A particulate solid fuel burner with a central oxygen lance as described in European patent application 09174622.2 filed on the same day as the present patent application was mounted in the side wall of a combustion furnace.

An auxiliary gaseous fuel burner was used to preheat the furnace to a temperature of 900°C, before starting up the particulate solid fuel burner.

The particulate solid fuel was a standard pulverized coal with a particle size (diameter) in the range of 75 to 120 µm.

The conveyor gas was recycled combustion gas. Analogous results were obtained with air as the conveyor gas.

The conveyor gas was supplied to the burner at a rate of 17,6 Nm3/h. It propelled pulverized coal to the burner at a rate of 30 kg/h.

The outer oxidant was supplied to the burner at a rate of 33 Nm3/h.

The total inner oxidant supply to the burner (first and second inner oxidants) was 13 Nm3/h.

The same oxidant with an oxygen content of 90%vol O₂ was used for the outer, for the first inner and for the second inner oxidant.

The total oxygen supply to the furnace corresponded to 113% of the stoichiometrically required amount of combustion oxygen.

The inner oxidant discharge velocity was higher than the fuel discharge velocity.

The oxygen-enriched fuel flow mixed with the first inner oxidant flow before mixing with the outer oxidant flow.

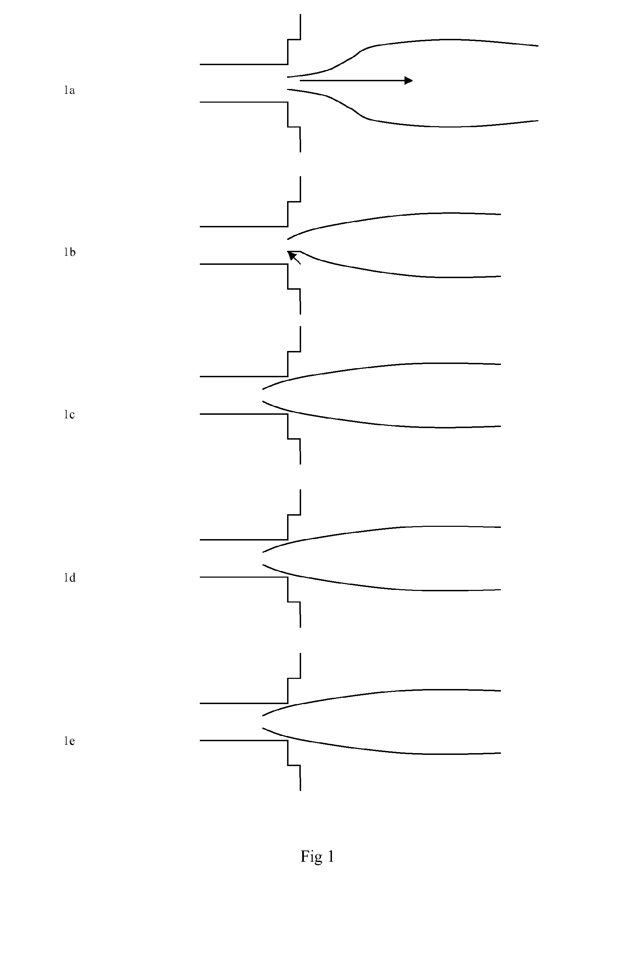

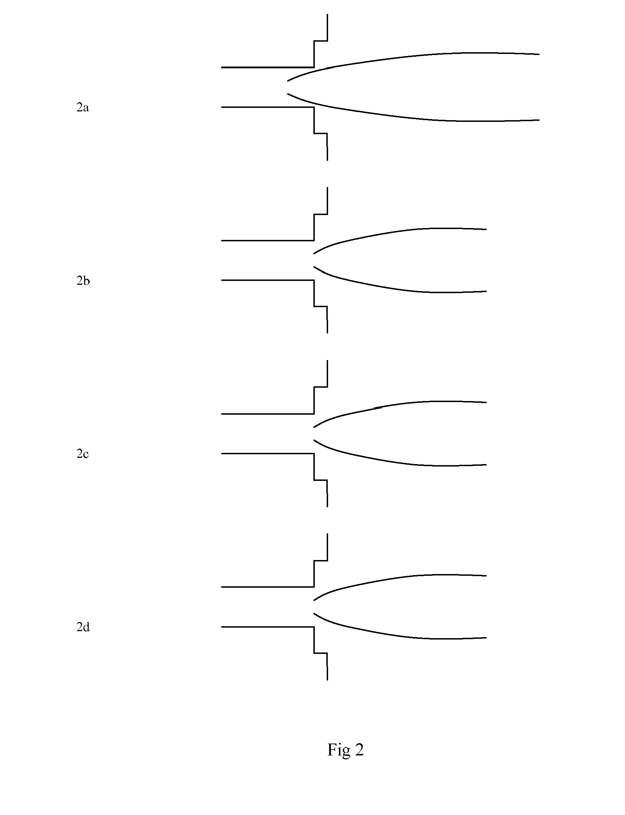

The results of said tests are presented in the table below, with reference to the enclosed figures 1 and 2, which are schematic representations in cross section of the type of flame obtained.

| first inner oxidant flow [m3/h ]/ second inner oxygen flow [m3/h ] | observations | Figure |
|---|---|---|
| 1.5 / 11.5 | The flame is unstable and detached from the burner front. | 1a |
| 3.0 / 10.0 | The flame is in part attached to and in part detached from the burner front, with a small improvement in flame stability. | 1b |
| 3.5 / 9.5 | Flame detached from burner front at burner startup, but becomes attached to the burner front shortly thereafter and becomes slightly recessed into the glory hole. | 1c |
| 4.0 / 9.0 | Flame stable and attached to burner, recessed into glory hole. | 1e |
| 5.2 / 7.8 | Flame stable and attached to burner, recessed into glory hole. | 2a |
| 6.5 / 6.5 | Long stable flame stable attached to burner, recessed into glory hole. | 2b |
| 7.5 / 5.5 | Flame no longer recessed in glory hole, getting at times detached from burner. Shorter flame. | 2c |
| 9.5 / 3.5 | Flame no longer recessed in glory hole. Flame even shorter. | 2e |
| 11.5 / 1.5 | Unstable (pulsating) short flame detached from burner. | 2f |

A more complete combustion of the particulate solid fuel and better flame stability and flame attachment to the burner front were observed using the method according to the present invention than is generally the case with known solid particulate fuel combustion methods when using similar total oxidant and fuel flows.

The bests results were obtained with first to second inner oxidant flow ratios between 4.0/9.0 and 7.5/4.5.

## Claims

1. A method of combining oxygen and fuel in a burner to produce a flame, said method comprising:
- supplying an outer flow of oxygen-containing oxidant to an outer oxidant-conducting passage of the burner, conducting said outer oxidant flow through said outer oxidant-conducting passage and discharging said outer oxidant flow with an outer oxidant discharge velocity from said outer oxidant-conducting passage through an outer oxidant outlet of the burner,
- supplying a fuel flow to a fuel-conducting passage of the burner, conducting said fuel flow through said fuel-conducting passage and discharging said fuel flow with a fuel discharge velocity from said fuel-conducting passage through a fuel outlet of the burner arranged coaxially with respect to the outer oxidant outlet and spaced radially inwardly therefrom,
- supplying a first inner flow of oxygen-containing oxidant to an inner oxidant-conducting passage of the burner, conducting said first inner oxidant flow through said inner oxidant-conducting passage and discharging said first inner oxidant flow with an inner oxidant discharge velocity from said inner oxidant-conducting passage through an inner oxidant end outlet of the burner arranged coaxially with respect to said fuel outlet and spaced radially inwardly therefrom,
**characterized in that**:
- the fuel flow is a flow of conveyor-gas propelled particulate solid fuel,
- a second inner oxidant flow, having a higher oxygen concentration than the conveyor gas, is supplied to the burner and is injected into the fuel-conducting passage and mixed with the fuel flow inside said fuel-conducting passage so as to obtain, upstream of the fuel outlet and upstream of the inner oxidant end outlet, an oxygen-enriched conveyor-gas propelled particulate solid fuel flow having an oxygen content of at least 21%vol O₂,
- the fuel discharge velocity differs from the inner oxidant discharge velocity so as to promote mixing between the fuel flow and the inner oxidant flow downstream of the inner oxidant end outlet.

2. Method according to claim 1, whereby, at the fuel outlet, the oxygen-enriched conveyor gas has an oxygen content of at least 28%vol O₂, preferably of at least 32%vol O₂.

3. Method according to any one of the preceding claims, wherein each of said first and second inner oxidant flows has an oxygen content of at least 50%vol O₂, preferably of at least 80 %vol O₂ and more preferably of at least 90%vol O₂.

4. Method according to any one of the preceding claims, wherein the outer oxidant flow is an air flow.

5. Method according to any one of claims 1 to 3, wherein the outer oxidant flow has an oxygen content of at least 50%vol O₂, preferably of at least 80 %vol O₂ and more preferably of at least 90%vol O₂.

6. Method according to any one of the preceding claims, whereby the conveyor gas is air.

7. Method according to any one of claims 1 to 5, whereby the conveyor gas contains combustion effluent gas, steam and/or CO₂.

8. Method according to any one of the preceding claims, whereby the particulate solid fuel is selected from pulverized coal, pet coke, particulate biomass and mixtures thereof.

9. Method according to any one of the preceding claims, whereby the second inner oxidant flow is injected into the fuel-conducting passage at multiple points of injection along the length of the fuel-conducting passage of the burner.

10. The method according to any one of the preceding claims, wherein the fuel flow is mixed with the first inner oxidant flow before being mixed the said outer oxidant flow.

11. The method according to one of the preceding claims, wherein at least 35%, preferably at least 50% and more preferably at least 65% of the total oxygen supply to the burner is supplied to the burner through the outer oxidant flow.

12. The method according to one of the preceding claims, wherein the first inner oxidant discharge velocity is equal to or greater than the outer oxidant discharge velocity.

13. Use of the method according to any one of the preceding claims to produce heat in a combustion zone of a furnace.

14. Use according to claim 13, whereby the furnace is select from the group consisting of: tunnel kilns and furnaces, passage kilns, boilers, rotary kilns and furnaces and tunnel furnaces.

15. Use according to claim 13 or 14 in the production of hydraulically setting binder.
